Europäisches Patentamt

European Patent Office

Office européen des brevets

(19)

(11) **EP 1 205 889 A1**

(12) **EUROPEAN PATENT APPLICATION**

| | |
|---|---|
| (43) Date of publication:<br>**15.05.2002 Bulletin 2002/20** | (51) Int Cl.[7]: **G07F 7/10** |

(21) Application number: **00124631.3**

(22) Date of filing: **10.11.2000**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI** | (72) Inventors:<br>• **Wrona, Konrad**<br>**52074 Aachen (DE)**<br>• **Tracz, Robert Daniel**<br>**24310 Karczmiska (PL)** |
| (71) Applicant: **TELEFONAKTIEBOLAGET LM**<br>**ERICSSON (publ)**<br>**126 25 Stockholm (SE)** | (74) Representative: **Tonscheidt, Andreas**<br>**Ericsson Eurolab Deutschland GmbH**<br>**Research Department**<br>**Ericsson Allee 1**<br>**52134 Herzogenrath (DE)** |

(54) **Returning of change in an electronic payment system**

(57)  The invention relates to a method of returning change to a payer in an electronic payment system. A payer determines a change return value, generates and blinds a change return certificate, generates a first signature by signing the blinded change return certificate, and sends a message comprising the first signature to a payee. The payee forwards the message to a payment provider. The payment provider verifies the first signature and the change return value indicated by the message, generates a blinded second signature by signing the blinded change return certificate, and forwards the blinded second signature to the payer. The payer unblinds and verifies the blinded second signature, and forms a second payment certificate. The invention furthermore relates to a method of performing tasks of a payer and to a method of performing tasks of a payment provider in a change return transaction, to computer programs and devices therefore.

Fig. 1

EP 1 205 889 A1

**Description**

The invention relates to a method and a computer program for returning a change in an electronic payment system, to a device of a payer, and to a device of a payment provider for use in a change returning electronic payment transaction.

**Technological background of the invention**

The volume of e-Commerce transactions rises quickly. Currently, electronic payment systems are developed for customers using both fixed and mobile terminals. The acceptance of an electronic payment system by a customer depends on the protection of the anonymity of the customer as well as on the untraceability and unlinkability of the payment transactions.

There are several anonymous untraceable token-based electronic payment systems. An overview can be found in "Chablis - Market Analysis of Digital Payment Systems", R. Weber, Technical Report, Institut für Informatik der Technischen Universität München, TUM-I9819.

The value of a token, i.e. a payment certificate, can be spent in two ways. It can be spent as an electronic coin, wherein the certificate is treated as an indivisible monetary unit like a coin. This is the way the macropayments are paid. Alternatively, it can be spent as a certificate for a micropayment series. A payer generates in this case a chain of one-way function values, and signs an initial value $w_0$ with the private key corresponding to the payment certificate. When this signature is verified and the certificate is checked against double spending, the payer can start releasing subsequent $w_i$ as micropayments. These micropayments can preferably be performed off-line. Thus even extremely small values can be paid effectively. The payment provider signs the payment certificate with a key that is unique for the value, issuer and validity period of the signed payment certificate. Thus the signature implicitly determines these parameters. Also this lets the payment provider to be sure of these values of the payment certificate, even if the signature is blind.

A system supporting both macropayment and micropayment is the Conditional Access for Europe (CAFE) system, which is described in Esprit 7023 CAFE Document PTS9364 "Technical Specifications", April, 1996. In this system, the payer's terminal consists of a tamper resistant smart card ($\alpha$ wallet) or contains a tamper resistant observer ($\Gamma$ wallet). A money counter, so-called currency table, is held at the payer's side. During a macropayment transaction a payment cheque is filled with the exact amount of the transaction and the currency table is updated. During a micropayment series (so called phone-tics) the currency table is updated after a whole series is paid. All other mechanisms remain the same as in the macropayment. Thus, there is no need for any change return. The payment provider has to trust to the currency table, and a payment can not succeed without an appropriate update of the currency table. This however requires a tamper resistant device, which narrows potential applications of the system.

Another system is called Ecash, which is an online, anonymous, and untraceable payment system developed by D. Chaum. Ecash does not support a return of change. Therefore, the customer is required to pay the exact price during an electronic payment transaction.

So far many electronic cash payment systems have been proposed, however none of them provides a solution to the problem of anonymous, untraceable and robust returning of change to the payer. It is a known concept to get the change directly from the payee, i.e. a whole payment transaction is performed as a dual-payment between a merchant and a client. This requires that the client deposits the change at the bank after receiving it from the payee, or it requires a system, which supports an off-line verification with a tamper-proof observation unit. If the deposit activity would be combined with the payment transaction, the client's anonymity can be lost. If the change is deposited after the payment itself, an additional online connection to the bank is required to be set-up by the client. Furthermore, a dishonest merchant could cause a client to accept a worthless change, if the payment verification is processed before the change verification and the change deposit.

Another known solution to overcome the problem of returning a change is to request, prior to the payment, from the bank an electronic coin with the exact required payment value or a number of coins adding up to the exact required payment value. In these cases, the bank can perform timing analysis of the transactions in order to identify and to trace the clients by correlating the client's withdrawals and the merchant's deposits of the same values. Since each client has to authenticate himself prior to a withdrawal, the bank can associate the withdrawal value with the client's identity, even if the bank cannot see the serial numbers of the issued coins in the case they are blinded. Furthermore, the coins with the exact required payment value have to be withdrawn from the bank before the payment is performed. This would require an online connection from the client to the bank in addition to the connection between the client and the merchant. Such an online connection would require a certain time and would cause additional cost.

Alternatively, the bank itself could generate the change. This does not guarantee the client's untraceability. Since the bank would know the serial numbers of the electronic coins, it could easily correlate a next payment to the same payer.

## Summary of the invention

It is therefore an object of the present invention to provide an improved method, a device and a computer program for returning a change in an electronic payment system.

This object is achieved by the methods of the 1, 4 and 10, by the computer program of claim 22, by the payment device of claim 24 and by the bank device of claim 26.

The invention provides a method of returning change to a payer in an electronic payment system, wherein the payer pays a due amount to a payee by means of a first payment certificate having a value of a first amount higher than the due amount, wherein a payment provider receives the first payment certificate, verifies the first payment certificate and credits the due amount to the payee. The payer determines at least one change return value such that the sum of the determined change return values is equal to the difference of the first amount and the due amount. The payer generates at least one change return certificate according to the at least one change return value, blinds the change return certificate, and generates a first signature by signing the blinded change return certificate. The payer sends a message comprising the first signature to the payee, who forwards the message to the payment provider.

The payment provider verifies the first signature, and the change return value indicated by the message, and generates a blinded second signature by signing the blinded change return certificate, if the verification of the first signature and of the change return value is successful. Then the payment provider forwards the blinded second signature to the payer.

The payer unblinds the blinded second signature, verifies the second signature, and forms at least one second payment certificate by linking the change return certificate and the unblinded second signature.

Advantageously, the invention provides a flexible, convenient and robust payment functionality that will suit also the needs of future customers, as it is applicable for present and future both mobile and fixed communication networks. The change returning method is optimised for mobile networks providing packet services as well as for fixed networks.

The invention ensures the anonymity of the payer and both the untraceability and unlinkability of his transactions towards the payment provider. This is achieved by the efficient use of blind signatures on the electronic certificates issued by the payment provider. The signatures received as a change are anonymous and neither of the parties involved in the transaction can recover the identity of the payer nor benefit from interfering with protocol messages. For the payment provider the issuance of the electronic money will be impossible to link with the spending.

The following steps are performed by the payer during a change returning transaction in an electronic payment system, wherein the payer pays a due amount by means of a first payment certificate having a value of a first amount higher than the due amount: The payer determines at least one change return value such that the sum of the determined change return values is equal to the difference of the first amount and the due amount. He generates at least one change return certificate according to the at least one change return value, and blinds the change return certificate. Then he generates a first signature by signing the blinded change return certificate, and sends a message comprising the first signature to the payee. After that, the payer receives a blinded second signature comprising a signed blinded change return certificate, unblinds the blinded second signature, and verifies the second signature. Furthermore, the payer forms at least one second payment certificate by linking the change return certificate and the unblinded second signature.

The following steps are performed by a payment provider during a change returning transaction in an electronic payment system, wherein a payment provider receives a first payment certificate having a value of a first amount higher than the due amount, verifies the first payment certificate and credits the due amount to a payee:

The payment provider receives a message comprising a first signature of a blinded change return certificate. He verifies the first signature as well as a change return value indicated by the message. If the verification of the first signature and of the change return value is successful, he generates a blinded second signature by signing the blinded change return certificate, and sends the second signature to a payee.

The proposed change return transaction allows for an easy implementation on appropriate devices of the payer and the payment provider, i.e. an easy implementation in a payment device like a mobile phone or in a bank device. The tasks of the payer and the payment provider are well defined, therefore an effective interworking is guaranteed. Furthermore, the amount of interactions between the parties is reduced to a minimum in order to save communications costs.

Another embodiment of the present invention relates to a computer program, loadable into the internal memory of a digital processing unit, comprising software code portions adapted to perform the steps according to any of the claims 1 to 21, when the computer program is executed on the digital processing unit. This computer program performing the steps according to the method, can be easily implemented either for the method of the whole change return transaction, e.g. for a simulation , for teaching or marketing purposes, or for the method comprising the payer's tasks, or for the method comprising the payment provider's tasks,.

The computer program performing the method comprising the tasks of the payer can in general perform any

**EP 1 205 889 A1**

task of this method, as well as the computer program performing the tasks of the payment provider can in general perform any task of this method.

Furthermore, the invention relates to a payment device, adapted to perform the steps of a method according to any of the claims 10 to 15. Advantageously, the device can also be adapted to perform any step of the method relating to the payer. Furthermore, the invention relates to a bank device, adapted to perform the steps of a method according to any of the claims 4 to 6. Advantageously, the device can also be adapted to perform any step of the method, as long as these steps relate to the payment provider.

Appropriate devices for an implementation of the methods or, respectively, of the computer program are a payment device, e.g. a mobile phone or an electronic wallet, for the payer's tasks, and a bank device for the payment provider's tasks. The signature schemes can be chosen in a way, that the payer performs always the computationally cheapest operation. However the optimisation is not limited to the payment device only. For all involved parties of the change return transaction the computational costs are low. The invention provides good scalability and low installation costs.

Preferred embodiments of the present invention are described in the dependent claims.

According to one embodiment of the invention, a second asymmetric key pair comprising a second public key and a second private key is assigned by the payment provider to a change return value. The change return certificate is blinded by the payer by means of a blinding factor, which is encrypted by means of the second public key. The blinded second signature is generated by the payment provider by signing the blinded change return certificate by means of the second secret key. The unblinding of the blinded second signature by the payer comprises a division of the blinded second signature by the blinding factor. The verification of the second signature by the payer comprises a decryption of the unblinded second signature and a test, whether the decrypted unblinded second signature corresponds to a generated change return certificate. Therefore, the anonymity of the payer is ensured in an effective manner, while at the same time the effort for the second signature is low.

According to a further embodiment of the invention, the payment provider sends the second public key to the payee, and the payee forwards the second public key to the payer. This ensures, that the payee can use a second public key, which is up-to-date.

According to another embodiment of the invention, a second asymmetric key pair comprising a second public key and a second private key is assigned by the payment provider to the change return value. The change return certificate is blinded by the payer by means of a blinding factor, which is encrypted by means of the second public key. The blinded second signature is generated by the payment provider by signing the blinded change return certificate by means of the second secret key. Therefore, the anonymity of the payer is ensured in an effective manner, while at the same time the effort for the second signature is low.

According to another embodiment of the invention, the message comprising the first signature includes the first payment certificate in order to perform the crediting of the first amount. Therefore, just one online connection to the payee and/or to the payment provider is needed, which lowers the communication costs.

According to another embodiment of the invention, a first asymmetric key pair comprising a first public key and a first private key is assigned to the first payment certificate. The first payment certificate comprises the first public key, and the first signature is generated by the payer by means of the first private key. The verification of the first signature is performed by the payment provider by means of the first public key. This provides the change return certificate with a secure reference to the first payment certificate.

According to another embodiment of the invention, the first signature indicates the value of the first amount of the first payment certificate, and the payment provider verifies the value of the first amount of the first payment certificate. The implicit indication of the value of the first payment certificate supports the verification of the value in an easy manner.

According to another embodiment of the invention, the payment provider stores at least one from a group comprising the first signature and the message comprising the first signature. This allows for the payment provider an easy re-issuing of the response to the message comprising the first signature, i.e. of the second signature, in the case that a payee claims, that an already issued second signature has been lost.

According to another embodiment of the invention, a first asymmetric key pair comprising a first public key and a first private key is assigned to the first payment certificate. The first payment certificate comprises the first public key,

the first signature is generated by means of the first private key. This provides the change return certificate with a secure reference to the first payment certificate.

According to another embodiment of the invention, a second asymmetric key pair comprising a second public key and a second private key is assigned to a change return value, the change return certificate is blinded by means of a blinding factor, which is encrypted by means of the second public key, the unblinding of the blinded second signature comprises a division of the second signature by the blinding factor, and the verification of the second signature comprises the decryption of the unblinded second signature and a test, whether the decrypted unblinded second signature is equal to a generated change return certificate. Therefore, the anonymity of the payer is ensured in an effective manner, while at the same time the effort for the second signature is low.

According to another embodiment of the invention, the first signature indicates the value of the first amount of the first payment certificate. The implicit indication of the value of the first payment certificate supports the verification of the value in an easy manner.

According to another embodiment of the invention, the second key is received. This ensures that the payee can use a second public key, which is up-to-date.

According to another embodiment of the invention, the second payment certificate is sent to a third party for storing as a backup. This prevents from a loss of the payment certificate, in case the payment device is lost or stolen or has a defect.

According to another embodiment of the invention, the first signature is generated by signing the blinded change return certificate and a change return value linked to the blinded change return certificate. This allows for an easy verification of the change return value due to a low necessary computational effort.

According to another embodiment of the invention, the message, which comprises the first signature and is sent to the payee, comprises at least one from a group comprising the blinded change return certificate and the change return value corresponding to the blinded change return certificate. This allows for an easy verification of the change return value due to a low necessary computational effort.

According to another embodiment of the invention, the first payment certificate is a macropayment certificate. Macropayment transactions represent an easy and effective way of electronic on-line payment transactions.

According to another embodiment of the invention, the first payment certificate is a micropayment certificate. Micropayment transactions represent an easy and effective way of electronic off-line payment transactions.

According to another embodiment of the invention, the blinding of the change return certificate comprises the steps of building a digest of the change return certificate and blinding the digest. This increases the security of the change return transaction.

According to another embodiment of the invention, the message comprising the first signature includes the first payment certificate in order to perform the payment of the first amount. Therefore, just one online connection to the payee is needed, which lowers the communication costs.

According to another embodiment of the invention, the computer program is stored on a computer-readable medium. Therefore, the computer program can be transferred easily between payment devices, bank devices, or in general, between computers.

**Brief description of the figures**

Fig. 1    shows a simplified payment model,
Fig. 2    shows a method of returning in an electronic payment system a change to a payer,
Fig. 3    illustrates an example of a change return certificate,
Fig. 4    shows a payment device, and
Fig. 5    shows a bank device.

**Detailed description**

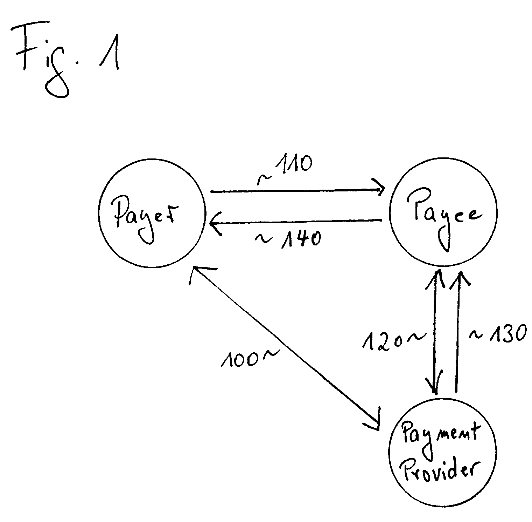

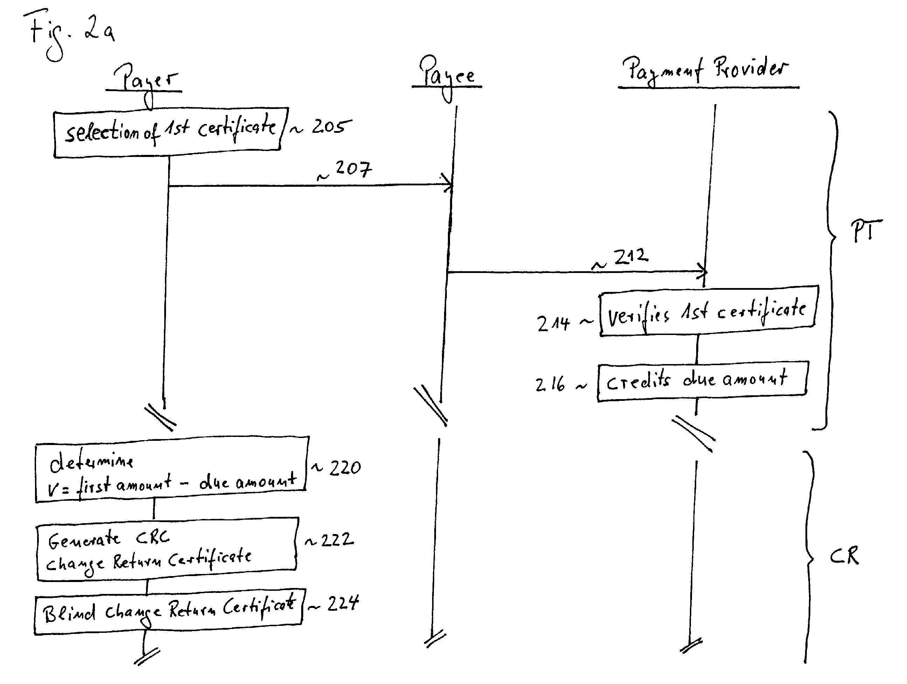

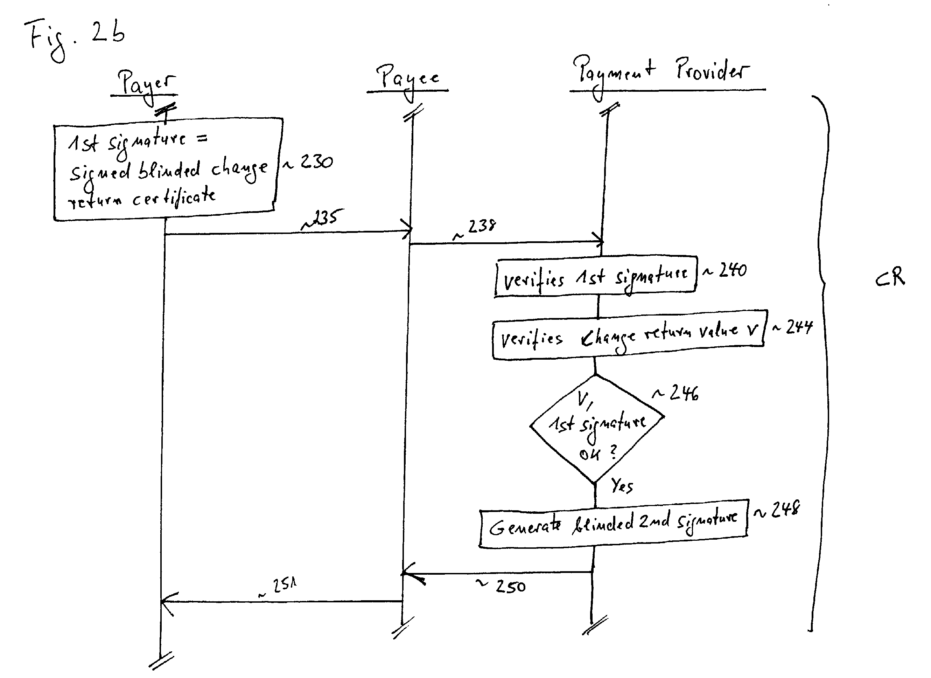

Fig. 1 shows a simplified payment model for electronic payment transactions. There are shown a payer, a payee and a payment provider, and messages exchanged between these parties. Preferably, the payer is a customer that has an account agreement with the payment provider. Based on this account agreement, the payer can withdraw from the payment provider payment certificates representing certain values. The payment certificates are valid for electronic payment transactions, e.g. for the payment of goods or services.

The payment provider is either a single financial institution or a network of them. If the payment provider represents a network of financial institutions, different entities in the network can be defined. There can be access entities providing access to the network, withdrawal entities providing payment certificates to payers, authorisation entities authorising electronic payments, entities acquiring payments for payees, and central entities, that co-ordinate payment-related activities like authorisations, captures and clearings.

The payee can be a merchant who is paid for services or goods delivered to the payer. There can be various types of services that require different ways of paying. For example, in an e-commerce shop a payer performs by means of a macropayment transaction a one-time payment for possible many purchased items. In another example, a long-distance phone call must be paid, e.g. by a micropayment transaction, simultaneously to many operators, wherein the total amount of the payment is not known until the call ends. The payee can have a merchant agreement with the payment provider, which provides the infrastructure needed to accept the payments.

During the withdrawal transaction 100 the payer gets from the payment provider blind signatures on anonymous certificates, so-called payment certificates. It is the meaning of a payment certificate that the payer, who proves the possession of a private key corresponding to a public key listed in the certificate is authorised to spend the value specified in the certificate. During the withdrawal, the payment provider debits from the account of the payer the value of each withdrawn certificate.

The payment 110 shown in Fig. 1 can be performed by a macropayment or a micropayment. In a macropayment transaction, the payment certificates are treated as electronic coins representing a fixed maximum value. During an on-line macropayment, the payer transmits payment certificates to the payee. The payer proves the possession of the private keys corresponding to these payment certificates by means of responding to a challenge. The payee performs an on-line authorisation 120 with the payment provider in order to check, whether the payment certificates are valid.

In general, the payment provider stores these payment certificates from which values have been credited to any account. As soon as a payment certificate is stored at the payment provider, it is treated as already spent, i.e. as invalid, by the payment provider. In order to check, whether a payment certificate is valid, i.e. in order to check against any double spending of the payment certificate, the payment provider searches in his database for the certificate. If the certificate is found in the database, it has been credited already, and therefore, is invalid for any payment. Otherwise, it will be treated as valid, if it is authentic, and its value can be credited to the account of the merchant. At least, the merchant is informed during the on-line authorisation, whether the certificate is valid.

If the payment certificate is valid, the payee accepts the payment and delivers the ordered goods or services to the payer. If the value of the payment certificates presented to the payee is higher than the due amount to be actually paid, a change is returned to the payer. The change is transmitted in message 130 from the payment provider to the payee, who forwards in message 140 it to the payer.

In a micropayment transaction, also called as a series of micropayments, the private key corresponding to the payment certificate is treated as a means of signing an initial value in a one-way function chain. The generic scheme of a one-way function chain payment is the following: The payer generates a chain $w_i$ of one-way function values such that:

$$w_i = h(w_{i+1})$$

h is a one-way function, e.g. a hash function. The generation starts with $w_n$ and ends down at $w_0$. As the one-way function is irreversible, the chain cannot be calculated from $w_0$ up to $w_n$. The payer signs the $w_0$ together with a commitment obligating himself to pay a certain amount, e.g. a certain amount of money, for each $w_i$, and releases consecutive $w_i$ (in ascending order) as payments. As h is an irreversible function the payee cannot calculate the values, which are not yet released by the payer. Thus the payee is unable to redeem more than he has been actually paid. The verification that the next $w_i$ is actually the next value of the hash chain is performed by checking if its hash equals to the value of $w_{i-1}$. Because such a check can be performed down to $w_0$, which is signed by the payer, the payment can not be repudiated.

A micropayment transaction includes an on-line authorisation that requires a communication connection between the payee and the payment provider, off-line micropayments, i.e. the single electronic micropayments are performed without any communication connection, an on-line final deposit and, if needed, an on-line change return. During the micropayment transaction, the payer presents a payment certificate to the payee. The payer proves the possession of the private key corresponding to the payment certificate and performs an on-line authorisation with the payment provider to check against a double spending of the payment certificate. The payer signs the initial value of a one-way function chain (with the private key corresponding to the payment certificate) and presents it to the payee. The payer releases subsequent values of the one-way function chain as micropayment tokens. At the end of the micropayment series the payee presents the obtained one-way function chain to the payment provider and gets the amount credited to his account. If the value of the payment certificate has not been used up, a change is given back to the payer.

In the following, the blind signature concept will be explained by means of an example based on the Rivest Shamir Adleman RSA signature scheme. RSA signatures are well known to a person skilled in the art. The example denotes a message $m$, e.g. a change return certificate of the present invention, that a payer wants to be signed by a payment provider. The payment provider has in accordance with the RSA scheme a public exponent e, a private, i.e. secret, exponent d and a value n for the calculation modulus n . The payer chooses a random number $r$, a so-called blinding factor, and prepares $m_b$, e.g. the blinded change return certificate, which is to be signed by the payment provider, in the following way:

$$m_b = m * r^e \ (mod \ n)$$

The payment provider signs $m_b$ with his private key to obtain a blind signature $s_b$:

$$s_b = m_b{}^d = m^d * r^{e*d} = m^d * r \ (mod \ n)$$

The payer divides $s_b$ by $r$ (modulo n) and obtains

$$s = m^d$$

$s = m^d$ is the signature on $m$. If $m$ is a change return certificate, the payer is able to form a valid payment certificate k by linking the message $m$ and the signature $s$:

$$k = m \mid s$$

If the payer keeps the blinding factor $r$ secret, the payment provider cannot find out what he has signed. Therefore, the payment provider cannot trace any payment from knowing the blinded payment certificate. In order to prevent the payer from manipulating the value of the payment certificate the payment provider assigns different RSA key pairs for different values of payment certificates.

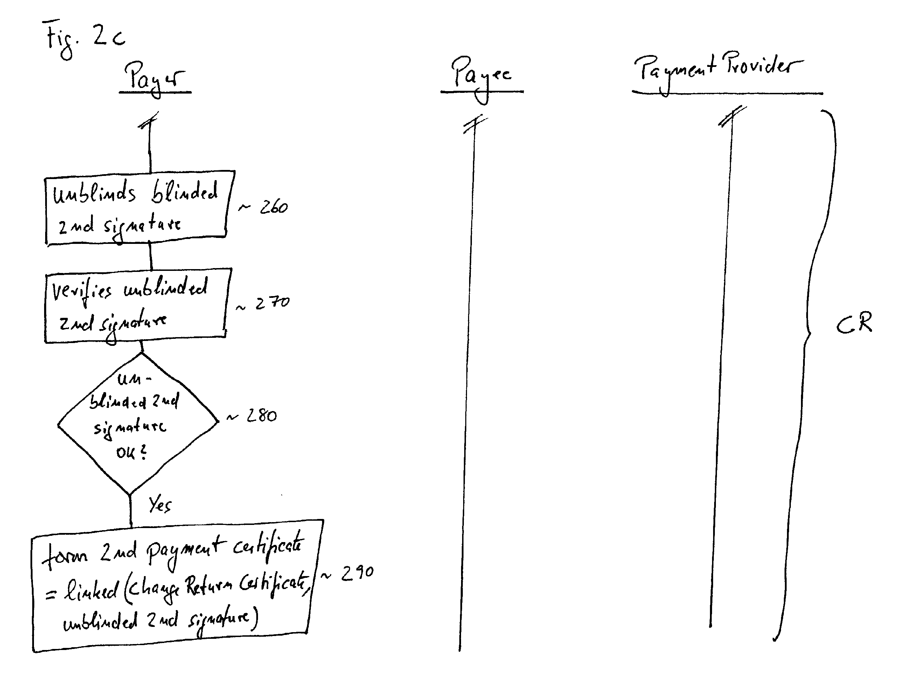

Fig. 2 shows a method of returning in an electronic payment system a change to a payer. Preferably, a payment transaction phase PT precedes the returning of change. The payer possesses a valid first payment certificate having a value of a first amount. The first payment certificate can be a macropayment certificate or a micropayment certificate. In one embodiment, there is a first asymmetric key pair assigned by the payment provider to the first payment certificate. By means of the key pair, the payment provider can identify clearly the value, i.e. the first amount, of the certificate. The key pair comprises a first public key and a first private key, from which the public key is included in the first payment certificate.

The payer performs a selection 205 of the first payment certificate having a due amount, which is lower than the first amount. Therefore, he can limit the value, which will be credited from the payment provider on the presented first payment certificate, e.g. by including the due amount into the first payment certificate. The first payment certificate is sent in message 207 to the payee, who forwards it in message 212 to the payment provider. The payment provider verifies 214 the first payment certificate and checks its validity as described above by searching in a database for it. If the first certificate is valid, the payment provider credits the due amount to the payee. During the crediting 214, he stores the first payment certificate in his database, i.e. he invalidates the first payment certificate for a further crediting of the due amount.

As the payer himself has paid during an earlier withdrawal transaction the first amount higher than the due amount, he requires a change having a value of the difference of the first amount of the first payment certificate and the due amount. The corresponding change return transaction is shown in the phase CR of Fig. 2.

The payer determines in step 220 at least one change return value such that the sum of the determined change return values is equal to the difference of the first amount and the due amount. Depending on the implementation of the payment system, payment certificates available might have certain discrete values. E.g., if a payment system supports payment certificates having the values 0,1 ; 0,5 ; 1 and 5, and assuming a payer pays a due amount of 4,4 by a payment certificate having a first value of 5, the total change is 0,6, which cannot be paid back by a single certificate. In this case the payer can choose between the change return value combination {0,5 ; 0,1} and {0,1 ; 0,1; 0,1; 0,1; 0,1 ; 0,1}. In both cases, the payer determines more than one change return value. If the due amount in the given example would have been 4,9, the payer would have determined just one change return value, i.e. 0,1 .

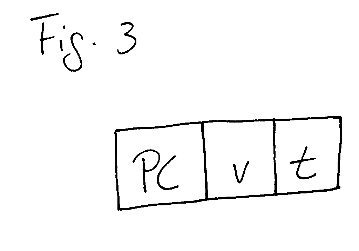

In step 222, the payer generates at least one change return certificate according to the determined change return value(s). An example of a change return certificate will be explained with respect to Fig. 3.

In the next step 224, the payer blinds the determined change return certificate, e.g. by means of a blinding factor as described above. Preferably, the blinding factor is a random integer value, e.g. generated by a random number generator. The payer keeps the blinding factor secret, but stores it for future use for verifications.

In an alternative embodiment, the payer builds a digest of the change return certificate and blinds the digest by means of the blinding factor. This can increase the security of the method and can facilitate a lower complexity of the calculations, e.g. of the encryption and decryption used. The digest can be built by means of a one-way function, e.g. as a hash-value.

There is in a preferred embodiment a second asymmetric key pair comprising a second public key and a second private key assigned by the payment provider to the determined change return value. Then the blinding factor is decrypted by means of the second public key to allow for a validation of the change return certificate for its value.

In addition, the payment provider can send the second public key to the payee, who forwards it to the payer in order to ensure that the appropriate key is used for the blinding. This can be triggered e.g. by a corresponding request of the transmission by the payer or the payee.

There are several possibilities to indicate the value of the blinded change return certificate. An implicit indication is, if in the whole payment system exists only one type of change return certificates, i.e. all change return certificate have the same value. In this case, no further information except about the existence of the change return certificate is needed to determine the value. Alternatively, the corresponding value might be derived by means of a unique correlation to the CRC from the change return certificate, by any pre-set deterministic scheme scheme described by a bijection, or explicitly given by the payer. The value can be comprised in the change return certificate or linked to it, e.g. by means of a signature of step 230, or it can be comprised in a message 235, 238.

In the next step 230, the payer generates a first signature by signing the blinded change return certificate. The first signature indicates the first payment certificate, on which the change return is based, or at least its value. This is achieved, e.g. if the first signature is generated by the payer by means of the first private key while the first key pair is assigned by the payment provider to the value of the first payment certificate.

In step 235, a message comprising the first signature is sent from the payer to the payee, who forwards the message 238 to the payment provider. This indirect transmission ensures the anonymity of the payer with respect to the payment provider. The message can comprise, apart from the first signature, e.g. the blinded change return certificate or its assigned value, e.g. for the purpose of verification.

The payment provider verifies in step 240 the first signature, in order to determine whether the first signature, which is treated as a request for a change return, relates to the first payment certificate, on which the change return transaction is based. The verification can be done by decrypting the first signature by means of the first public key. Furthermore, the payment provider checks by searching its database as described before, whether the first payment certificate is valid for a payment.

In addition, the payment provider verifies, whether the change return value, which is requested and indicated implicitly or explicitly by the received message comprising the first signature, is correct. E.g., if the sum of the requested change return value and the due amount credited to the payee is higher than the value of the first amount of the first payment certificate, the payment provider rejects the returning of change.

If both verifications are successfully performed in step 246, the payment provider generates a blinded second signature by signing the blinded change return certificate from the received message. This can be done, e.g., by signing the blinded change return certificate by means of the second secret key.

The payment provider forwards the blinded second signature to the payer, preferably via the payee in messages 250, 251. Alternatively, the forwarding can be performed via any other trusted third party. As long as the payment provider cannot forward the blinded second signature directly to the payer, the anonymity of the change return transaction is secured.

In one embodiment the payment provider stores at least one from either the first signature and the message comprising the first signature. This is useful, if the payer claims that the requested change has not been returned. For this purpose, the payer can connect to the payment provider, prove the possession of the first private key corresponding to the first payment certificate and request the change. Now the payment provider can check his database for the status of the transaction involved. If the payment provider has already issued the change for the respective transaction, the payer is either trying to manipulate or the protocol of returning the change has failed, e.g. the forwarded blinded second signature has been lost on the transmission path. In both cases the payment provider can re-send the blinded second signature he has already signed to the payer. Even if the payer will claim the change many times, he always receives the same second blinded signature. Thus he gains nothing but the rightful change that can be spent only once.

In step 260 the payer unblinds the received blinded second signature, e.g. by a division of the blinded second signature by the blinding factor. The payer verifies the unblinded second signature in step 270, e.g. by a decryption of the unblinded second signature and a test, whether the decrypted unblinded second signature corresponds to a generated change return certificate. If the verification is successful 280, the payer generates in step 290 a second payment certificate, which comprises the change return certificate linked to the unblinded second signature.

Preferably, the payer stores the second payment certificate. Alternatively, he can use the certificate directly for another payment transaction. In one embodiment the payer sends the certificate and/or a private key corresponding to the certificate to a trusted third party for storing as a backup. This is useful, in case the payment device storing the second payment certificate is stolen, lost or due to other reasons out of order. The backup ensures in these cases that the second payment certificate is not lost finally.

In the following, a preferred embodiment is summarised as a change protocol specification. The first two messages of the change return protocol are in a prefered embodiment of the invention piggybacked with the payment messages 110, 120 either corresponding to macropayment or micropayment protocols. During the change return protocol, usually more than one payment certificate needs to be signed by the payment provider in order to express the value of the change needed. The specification below presents the protocol for a plurality of certificates. They are numbered from 1 to n. However, after unblinding, all the payment certificates issued as change are independent from each other. It is assumed that the change is given back from a first payment certificate, whereto a public and private key respectively $PC_0$, $SC_0$ are assigned. The signature scheme used to sign the certificates is RSA.

A payment certificate can be for example a Simple Public Key Infrastructure SPKI certificate, which is a credential certificate that directly binds a key to an authorisation. As the name of the certified entity is not involved, any authorisation can be proved anonymously. The main goal of a SPKI certificate is to transfer authorisation without using the name of the keyholder. An authorisation SPKI certificate can contain the following fields: the issuer of the certificate, the subject, e.g. the public key, a delegation, i.e. a flag stating whether the subject can transfer the authorisation to some other entities, an authorisation and a validity period. The delegation flag is set for payment certificates preferably to the value 'false'.

A typical application of an SPKI certificate is following: an entity A presents his SPKI authorisation certificate and proves that he possess the private key corresponding to the public key on the certificate. By verifying that, along with verification whether the issuer of this certificate was authorised to issue it, one can be convinced that A is actually authorised to the resources of interest. The name of A was not involved, so he can stay anonymous.

The following table explains the symbols used in the specification.

| =?= | Comparison of two expression |
| --- | --- |
| = | Assignment |
| I | Concatenation |
| {x}S | Signature on message x performed with key S |
| C, $C_{\$v}$ | Payment certificate, payment certificate worth v |
| $C_b$ | Blinded payment certificate |
| $C_{raw}$ | Unsigned certificate |
| $D_{\$v,t}$ | Private RSA exponent in key $SB_{\$v,t}$ |
| $E_{\$v,t}$ | Public RSA exponent in key $PB_{\$v,t}$ |
| H(x) | Message digest of x |
| $N_{\$v,t}$ | RSA modulus in key $PB_{\$v,t}$ |
| $PB_{\$v,t}$; $SB_{\$v,t}$ | Respectively public and private RSA key used by the payment provider to sign the payment certificates of value v at time t. |
| $PC_0$, $SC_0$ | Respectively public and private key of the payment certificate from which the change is being returned. |
| R | Symbol denoting blinding factor |
| $S_b$ | Payment provider's blind signature on the payment certificate. |
| SPKI(PC, v, t) | Transformation that outputs unsigned SPKI certificate containing PC as subject, authorisation for spending value of v, and validity starting from time t. |
| $S_u$ | Payment provider's blind signature on the payment certificate - unblinded by the payer. |
| T | Symbol denoting time |
| V | Symbol denoting value |

In a first step, the payer generates random asymmetric key pairs:

$(PC_1, SC_1), .., (PCn, SCn)$.

In the next step, the payer generates new SPKI certificates with a total value of the change to be given back:

$Craw_1 = SPKI(PC_1, v_1, t)$; ...; $Crawn = SPKI(PCn, vn, t)$ In the next step, the payer generates blinding factors $r1, .., r_n$ for these certificates. Optionally, the payment provider sends the payee the current public keys $PB_{\$*,t}$ used to sign the payment certificates. Optionally, the payee forwards to the payer the current public keys $PB_{\$*,t}$ used to sign the payment certificates.

Then, the payer prepares blinded message digests of the change payment certificates:

$$C_{b1} = H(Craw_1) * r^{E\$v1,t} \pmod{n_{\$v1,t}}$$

$$...$$

$$C_{bn} = H(Craw_n) * r^{E\$vn,t} \pmod{n_{\$vn,t}}$$

The payer sends these blinded message digests, along with the certificate requested by the payer and a signature performed with the private key of the payment certificate from which the change is returned. These blinded message digests can be treated as blinded payment certificates:

$$C_{b1}, v_1, .., C_{bn}, v_n, \{C_{b1}, v_1, .., C_{bn}, v_n\}SC_0$$

The payee forwards this message to the payment provider.
The payment provider verifies the signature and stores the whole message in his database. Thus it is possible to reissue this change afterwards.
It is also checked if the total value of all these certificates is complementary with the value of the underlying transaction. The following is verified and stored:

$$C_{b1}, v_1, .., C_{bn}, v_n, \{C_{b1}, v_1, .., C_{bn}, v_n\}SC_0$$

The payment provider blindly signs the message digests of the payment certificates with appropriate keys:

$$S_{b1} = C_{b1d\$v1,t} \pmod{n_{\$v1,t}}$$

$$...$$

$$S_{bn} = C_{bnd\$vn,t} \pmod{n_{\$vn,t}}$$

These signatures $S_{b1}, .., S_{bn}$ are sent to the payee. The payee forwards the signatures $S_{b1}, .., S_{bn}$ to the payer.
The payer unblinds the signatures:

$$S_{u1} = S_{b1} / r_1 \pmod{n_{\$v1,t}} = \{C_{raw1}\}SB_{\$v1,t}$$

$$...$$

$$S_{un} = S_{bn} / r_n \pmod{n_{\$vn,t}} = \{C_{rawn}\}SB_{\$vn,t}$$

The payer verifies the signatures:

$$S_{u1}^{e\$v1,t} \pmod{n_{\$v1,t}} =?= H(C_{raw1})$$

$$...$$

$$S_{un}^{e\$vn,t} \pmod{n_{\$vn,t}} =?= H(C_{rawn})$$

The payer forms signed payment certificates:

$$C_1 = C_{raw1} \mid S_{u1}$$

...

$$C_n = C_{rawn} \mid S_{un}$$

In a further preferred embodiment the present invention is realised by a computer program, which performs the steps of the inventive method if it is executed on a digital processing device. Such a computer program can be used, e.g., for the purpose of a simulation of a change return transaction of an electronic payment system or for a presentation due to product marketing reasons.

The returning of change is described in the above embodiments from a systems point of view. Further embodiments of the invention relate to implementations of those parts of the method that are performed by the different involved parties. In particular, a useful embodiment represents a method of performing tasks of a payer in a change returning transaction in an electronic payment system. The method comprises the mentioned steps above, in which the payer is involved. A preferred embodiment relates to a computer program that performs these steps, as it allows for an easy implementation of the payer's part of the method in a payer's terminal, also called payment device, e.g. by means of the implementation in a corresponding protocol stack.

A further useful embodiment represents a method of performing tasks of a payment provider in a change returning transaction in an electronic payment system. The method comprises the mentioned steps, in which the payment provider is involved. A preferred embodiment relates to a computer program that performs these steps, as it allows for an easy implementation of the payment provider's part of the method in a corresponding terminal or subsystem like a bank device, e.g. by means of the implementation in a corresponding protocol stack.

Further embodiments relate to the computer programs stored each on a computer readable medium. A computer readable medium can be a floppy disk, a hard disk, an optical disc, a CD-Rom, as well as a memory chip or a secure memory chip. These allow for a portability of the computer programs. In particular in the case of a secure memory chip it provides for security against unauthorised manipulations by third parties.

Fig. 3 shows an example for a payment certificate. It comprises a public key PC, a value v and a time t representing a validity of the certificate.

The validity time t can in dependence on the implementation of the change return protocol be a duration, for which the certificate is valid, a time when the certificate has been issued, e.g. if the payment system operates with default validity periods, or a time, when the certificate becomes invalid.

The values of payment certificates are preferably discrete and selected from a sequence of the form of 0.01; 0.02; 0.05; 0.1; 0.2; 0.5; 1; 2; 5; 10; 20; 50... The average number of certificates needed to express an arbitrary amount equals $C * n / \ln(n)$, where n is the base of the notation system (n=2 for binary system, n=10 for decimal system) and C is a constant. Thus the optimal n equals 2.71, which means that the smallest number of payment certificates needed is obtained for n = 2 or n = 3. As the 1, 2, 5 system is used in most of the cash systems and is quite close to binary system (1, 2, 4), it satisfies both efficiency and human intuition.

The only mandatory field in a payment certificate, which is used in key-based, e.g. RSA-based, electronic payment system, is the public key. However other information, such as the issuer, the value and the validity can be explicitly defined. The payment certificate can be valid only in conformance to the information implicitly expressed by the payment provider's choice of the signing key. Neither the name of the payer nor information that could identify the payer has to be listed on the payment certificate. Furthermore, any two payment certificates can be independent from each other. These properties, along with the use of blind signatures, ensure the anonymity of the payer as well as untraceability and unlinkability of his transactions.

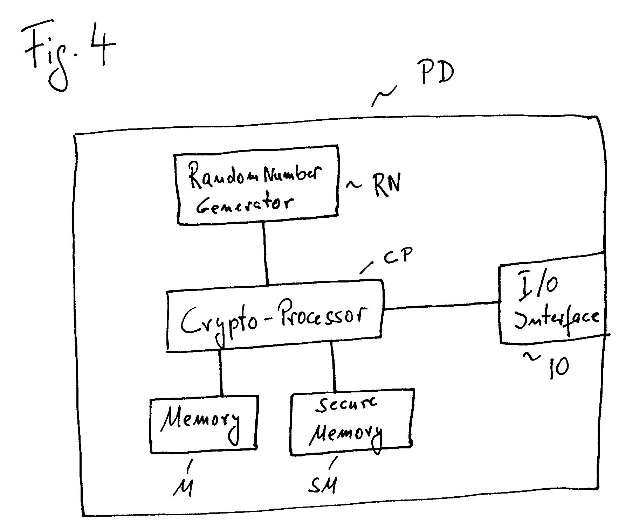

Fig. 4 shows a payment device PD, e.g. a mobile phone, comprising a crypto-processor CP, which is a processor capable of performing in particular complex mathematical calculations like encryption and decryption operations in an effective manner, a secure memory SM, i.e. a tamper resistant device, for storing e.g. private keys, a further memory M, e.g. for storing public keys and payment certificates, a random number generator RN, e.g. for the generations of random numbers needed for the generation of keys or blinding factors, and an Input-Output Interface IO for information transmission purposes. The crypto-processor is connected to the secure memory, the memory, the random number generator and the Input-Output Interface. The payment device is adapted to perform the tasks of a payer in a change returning transaction in an electronic payment system according to any method described above. Therefore, a corresponding computer program according to the invention can be used, which can be loaded e.g. in the secure memory and executed by the crypto-processor.

Another embodiment of the present invention relates to a chip card, which comprises at least one element from the group crypto-processor, secure memory, memory and random number generator, wherein the chip card can be inserted into a complementary payment device, e.g. a mobile phone or a laptop computer, resulting in the payment device as shown in Fig. 4. The complementary payment device with the inserted chip card is adapted to perform the tasks of a payer in a change returning transaction in an electronic payment system according to any method described above. In a further embodiment the chip card is a Subscriber Identity Module SIM card for a mobile phone.

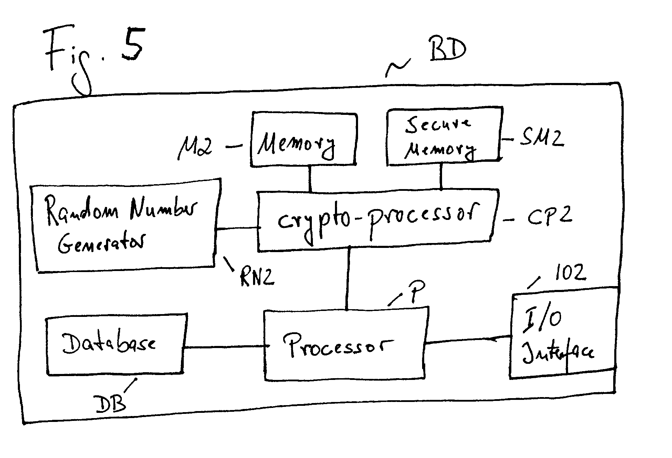

Fig. 5 shows a bank device BD comprising a processor P, a crypto- processor CP2, which is a processor capable of performing in particular complex mathematical calculations like encryption and decryption operations in an effective manner, a secure memory SM2 for storing e.g. private keys and payment certificates, a memory M2, e.g. for storing public keys, a random number generator, e.g. for the generations of random numbers needed for the generation of keys or blinding factors, a database DB for storing payment certificates, of which value has been credited to a payee, and an Input-Output Interface IO2 for information transmission purposes. The crypto-processor is connected to the secure memory, the memory, the random number generator. The processor is connected to the crypto-processor, the database and the Input-Output Interface. The bank device is adapted to perform the tasks of a payment provider in a change returning transaction in an electronic payment system according to the method described above. Therefore, a corresponding computer program according to the invention can be used, which can be loaded e.g. in the secure memory.

**Claims**

1. Method of returning change to a payer in an electronic payment system, wherein the payer pays a due amount to a payee by means of a first payment certificate having a value of a first amount higher than the due amount, wherein a payment provider receives the first payment certificate, verifies the first payment certificate and credits the due amount to the payee,
   <u>characterised in</u> that
   the payer performs the steps of:

   - determining at least one change return value such that the sum of the determined change return values is equal to the difference of the first amount and the due amount,
   - generating at least one change return certificate according to the at least one change return value,
   - blinding the change return certificate,
   - generating a first signature by signing the blinded change return certificate,
   - sending a message comprising the first signature to the payee,
   - forwarding the message to the payment provider, and

   the payment provider performs the steps of:

   - verifying the first signature,
   - verifying the change return value indicated by the message,
   - generating a blinded second signature by signing the blinded change return certificate, if the verification of the first signature and of the change return value is successful,
   - forwarding the blinded second signature to the payer, and

   the payer performs the steps of

   - unblinding the blinded second signature,
   - verifying the second signature,
   - forming at least one second payment certificate by linking the change return certificate and the unblinded second signature.

2. Method according to claim 1, wherein

   a second asymmetric key pair comprising a second public key and a second private key is assigned by the payment provider to a change return value,
   the change return certificate is blinded by the payer by means of a blinding factor, which is encrypted by means of the second public key,
   the blinded second signature is generated by the payment provider by signing the blinded change return certificate by means of the second secret key,
   the unblinding of the blinded second signature by the payer comprises a division of the blinded second signature by the blinding factor,
   the verification of the second signature by the payer comprises a decryption of the unblinded second signature and a test, whether the decrypted unblinded second signature corresponds to a generated change return certificate.

**3.** Method according to claim 1 or 2, wherein the payment provider sends the second public key to the payee, and the payee forwards the second public key to the payer.

**4.** Method of performing tasks of a payment provider in a change returning transaction in an electronic payment system,
wherein a payment provider receives a first payment certificate having a value of a first amount higher than the due amount, verifies the first payment certificate and credits the due amount to a payee,
**characterised in** the steps of

- receiving a message comprising a first signature of a blinded change return certificate,
- verifying the first signature,
- verifying a change return value indicated by the message,
- generating a blinded second signature by signing the blinded change return certificate, if the verification of the first signature and of the change return value is successful, and
- sending the second signature to the payee.

**5.** Method according to claim 4, wherein

a second asymmetric key pair comprising a second public key and a second private key is assigned by the payment provider to the change return value,
the change return certificate is blinded by means of a blinding factor, which is encrypted by means of the second public key,
the blinded second signature is generated by the payment provider by signing the blinded change return certificate by means of the second secret key.

**6.** Method according to claim 4 or 5, wherein the message comprising the first signature includes the first payment certificate in order to perform the crediting of the first amount.

**7.** Method according to any of the claims 1 to 6, wherein

a first asymmetric key pair comprising a first public key (PC0) and a first private key (SC0) is assigned to the first payment certificate,
the first payment certificate comprises the first public key,
the first signature is generated by the payer by means of the first private key (SC0), the verification of the first signature is performed by the payment provider by means of the first public key.

**8.** Method according to any of the claims 1 to 7, wherein the first signature indicates the value of the first amount of the first payment certificate, and wherein the payment provider verifies the value of the first amount of the first payment certificate.

**9.** Method according to any of the claims 1 to 8, wherein the payment provider stores at least one from a group comprising the first signature and the message comprising the first signature.

**10.** Method of performing tasks of a payer in a change returning transaction in an electronic payment system, wherein the payer pays a due amount by means of a first payment certificate having a value of a first amount higher than the due amount,
**characterised in** the steps of

- determining at least one change return value such that the sum of the determined change return values is equal to the difference of the first amount and the due amount,
- generating at least one change return certificate according to the at least one change return value,
- blinding the change return certificate,
- generating a first signature by signing the blinded change return certificate,
- sending a message comprising the first signature to a payee,
- receiving a blinded second signature comprising a signed blinded change return certificate,
- unblinding the blinded second signature,

- verifying the second signature,
- forming at least one second payment certificate by linking the change return certificate and the unblinded second signature.

**11.** Method according to claim 10, wherein

a first asymmetric key pair comprising a first public key (PC0) and a first private key (SC0) is assigned to the first payment certificate,
the first payment certificate comprises the first public key,
the first signature is generated by means of the first private key (SC0).

**12.** Method according to claim 10 or 11, wherein

a second asymmetric key pair comprising a second public key and a second private key is assigned to a change return value,
the change return certificate is blinded by means of a blinding factor, which is encrypted by means of the second public key,
the unblinding of the blinded second signature comprises a division of the second signature by the blinding factor,
the verification of the second signature comprises the decryption of the unblinded second signature and a test, whether the decrypted unblinded second signature corresponds to a generated change return certificate.

**13.** Method according to any of the claims 10 to 12, wherein the first signature indicates the value of the first amount of the first payment certificate.

**14.** Method according to any of the claims 10 to 13, with the step of receiving the second public key.

**15.** Method according to any of the claims 10 to 14, wherein at least one of the group from the second payment certificate and a private key corresponding to the second payment certificate is sent to a third party for storing as a backup.

**16.** Method according to any of the claims 1 to 15, wherein the first signature is generated by signing the blinded change return certificate and a change return value linked to the blinded change return certificate.

**17.** Method according to any of the claims 1 to 16, wherein the message, which comprises the first signature and is sent to the payee, comprises at least one from a group comprising the blinded change return certificate and the change return value corresponding to the blinded change return certificate.

**18.** Method according to any of the claims 1 to 17,
wherein the first payment certificate is a macropayment certificate.

**19.** Method according to any of the claims 1 to 17,
wherein the first payment certificate is a micropayment certificate.

**20.** Method according to any of the claims 1 to 19, wherein the blinding of the change return certificate comprises the steps of building a digest of the change return certificate and blinding the digest.

**21.** Method according to any of the claims 1 to 3 or 10 to 15, wherein the message comprising the first signature includes the first payment certificate in order to perform the payment of the first amount.

**22.** Computer program, loadable into the internal memory of a digital processing unit, comprising software code portions adapted to perform the steps according to any of the claims 1 to 21, when the computer program is executed on the digital processing unit.

**23.** Computer program according to claim 22, wherein the computer program is stored on a computer-readable medium.

**24.** Payment device, adapted to perform the steps of a method according to any of the claims 10 to 15.

**25.** Payment device according to claim 24, wherein the payment device is a mobile phone.

**26.** Bank device, adapted to perform the steps of a method according to any of the claims 4 to 6.

Fig. 1

Fig. 2a

Payer          Payee          Payment Provider

| selection of 1st certificate | ~ 205

~ 207

~ 212

214 ~ | verifies 1st certificate |

216 ~ | credits due amount |

PT

| determine<br>V = first amount – due amount | ~ 220

| Generate CRC<br>change Return Certificate | ~ 222

| Blind Change Return Certificate | ~ 224

CR

EP 1 205 889 A1

Fig. 2b

| Payer | Payee | Payment Provider |

1st signature =
Signed blinded change
return certificate  ~ 230

~ 235  → ~ 238 →

verifies 1st signature  ~ 240

verifies change return value V  ~ 244

V,
1st signature
OK ?  ~ 246

Yes

Generate blinded 2nd signature  ~ 248

← ~ 251  ← ~ 250

CR

EP 1 205 889 A1

Fig. 2c

Payee

Payment Provider

CR

Unblinds blinded 2nd signature ~ 260

Verifies unblinded 2nd signature ~ 270

Un-blinded 2nd signature ok? ~ 280

Yes

form 2nd Payment certificate = linked (Charge Return Certificate, unblinded 2nd signature) ~ 290

Fig. 3

| PC | v | t |
|----|---|---|

Fig. 4

Fig. 5

~ BD

M2 — Memory

Secure Memory — SM2

Random Number Generator — RN2

crypto-processor — CP2

Database — DB

Processor — P

I/O Interface — 102

European Patent

Office

## EUROPEAN SEARCH REPORT

Application Number

EP 00 12 4631

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 768 385 A (SIMON DANIEL R) 16 June 1998 (1998-06-16) * column 5, line 59 - column 7, line 59; claim 1; figures 3-7 * | 1-26 | G07F7/10 |
| A | US 5 953 423 A (ROSEN SHOLOM S) 14 September 1999 (1999-09-14) * column 1, line 15-31; claim 1 * * column 3, line 22-45 * | 1-26 | |
| A | EP 0 865 010 A (POSTE ;FRANCE TELECOM (FR)) 16 September 1998 (1998-09-16) * page 3, line 16-39 * | 1-26 | |
| | | | **TECHNICAL FIELDS SEARCHED (Int.Cl.7)** |
| | | | G07F |

The present search report has been drawn up for all claims

| Place of search | Date of completion of the search | Examiner |
|---|---|---|
| MUNICH | 10 April 2001 | Beauce, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 00 12 4631

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2001

| Patent document<br>cited in search report | | Publication<br>date | Patent family<br>member(s) | | Publication<br>date |
|---|---|---|---|---|---|
| US 5768385 | A | 16-06-1998 | CA | 2229206 A | 13-03-1997 |
| | | | EP | 0873615 A | 28-10-1998 |
| | | | JP | 2000503786 T | 28-03-2000 |
| | | | WO | 9709688 A | 13-03-1997 |
| US 5953423 | A | 14-09-1999 | US | 5799087 A | 25-08-1998 |
| | | | US | 5557518 A | 17-09-1996 |
| | | | AU | 720200 B | 25-05-2000 |
| | | | AU | 5561596 A | 07-11-1996 |
| | | | BR | 9608187 A | 04-05-1999 |
| | | | CA | 2218612 A | 24-10-1996 |
| | | | CN | 1185851 A | 24-06-1998 |
| | | | CZ | 9703323 A | 16-09-1998 |
| | | | EP | 0823105 A | 11-02-1998 |
| | | | HU | 9800982 A | 28-08-1998 |
| | | | JP | 11504144 T | 06-04-1999 |
| | | | NO | 974835 A | 19-12-1997 |
| | | | NZ | 306918 A | 29-07-1999 |
| | | | PL | 323007 A | 02-03-1998 |
| | | | SI | 9620055 A | 31-10-1998 |
| | | | SK | 142697 A | 04-11-1998 |
| | | | WO | 9633476 A | 24-10-1996 |
| | | | US | 6047067 A | 04-04-2000 |
| | | | US | 5963648 A | 05-10-1999 |
| | | | US | 5920629 A | 06-07-1999 |
| | | | AU | 690662 B | 30-04-1998 |
| | | | AU | 2105895 A | 29-11-1995 |
| | | | AU | 701201 B | 21-01-1999 |
| | | | AU | 5283598 A | 02-04-1998 |
| | | | AU | 697007 B | 24-09-1998 |
| | | | AU | 5283698 A | 23-04-1998 |
| | | | AU | 696726 B | 17-09-1998 |
| | | | AU | 5283798 A | 23-04-1998 |
| | | | AU | 697013 B | 24-09-1998 |
| | | | AU | 5283898 A | 23-04-1998 |
| | | | BR | 9507107 A | 09-09-1997 |
| | | | CA | 2184380 A | 09-11-1995 |
| | | | CN | 1147875 A | 16-04-1997 |
| | | | CZ | 9602513 A | 15-10-1997 |
| | | | EP | 1083533 A | 14-03-2001 |
| | | | EP | 0758474 A | 19-02-1997 |
| | | | FI | 964032 A | 08-10-1996 |
| | | | HU | 76463 A,B | 29-09-1997 |
| | | | JP | 9511350 T | 11-11-1997 |
| | | | NO | 964538 A | 05-12-1996 |
| | | | NZ | 283103 A | 26-02-1998 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.                    EP 00 12 4631

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2001

| Patent document cited in search report | Publication date | Patent family member(s) | Publication date |
|---|---|---|---|
| US 5953423 A | | NZ 329065 A | 25-03-1998 |
| | | NZ 329066 A | 25-03-1998 |
| | | NZ 329067 A | 25-03-1998 |
| | | NZ 329068 A | 25-03-1998 |
| | | PL 317026 A | 03-03-1997 |
| | | PL 179928 B | 30-11-2000 |
| | | RU 2136042 C | 27-08-1999 |
| | | SI 9520039 A | 30-06-1997 |
| | | SK 117696 A | 08-10-1997 |
| EP 0865010 A | 16-09-1998 | FR 2760876 A | 18-09-1998 |

EPO FORM P0459

For more details about this annex : see Official Journal of the European Patent Office, No. 12/82